(19) Europäisches Patentamt

European Patent Office

Office européen des brevets

(11) EP 2 378 447 A1

(12) EUROPEAN PATENT APPLICATION

(43) Date of publication:
19.10.2011 Bulletin 2011/42

(51) Int Cl.:
G06F 17/50 (2006.01)

(21) Application number: 11161336.0

(22) Date of filing: 06.04.2011

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME

(30) Priority: 13.04.2010 US 759594

(71) Applicant: Livermore Software Technology
Corporation
Livermore CA 94551 (US)

(72) Inventor: Goel, Tushar
Livermore, CA 94551 (US)

(74) Representative: Becker Kurig Straus
Patentanwälte
Bavariastrasse 7
80336 München (DE)

(54) **Identification of most influential design variables in engineering design optimization**

(57) A method of identifying most influential design variables in a multi-objective engineering design optimization of a product is disclosed. According to one aspect of the present invention, a product is optimized with a set of design variables and a set of response functions as objectives and constraints. Representative product design alternatives (samples) are chosen from the design space and evaluated for responses. Metamodels are then used for fitting the sample responses to facilitate a global sensitivity analysis of all design variables versus the response functions. A graphical presentation tool is configured for allowing the user to conduct "what-if" scenarios by interactively applying respective weight factors to response functions to facilitate identification of most influential design variables. Engineering design optimization is then conducted in a reduced design space defined by the most influential design variables.

200

START

202 — Receive a description of a product to be optimized including a set of design variables and a set of response functions in terms of objectives and constraints, the set of design variables forms a n-dimensional design space, each design variable has a baseline value and a range defined by upper and lower bound values

204 — Choose most influential design variables by screening the entire set of design variables using a global sensitivity analysis together with an interactive "what-if" decision tool

206 — Obtain a set of optimal designs (e.g., Pareto optimal solution set) by performing optimization in a reduced design space of most influential design variables, remaining design variables are fixed to particular values

END

*FIG. 2*

EP 2 378 447 A1

**Description**

**FIELD OF THE INVENTION**

The present invention generally relates to engineering design optimization, more particularly to a system and method of graphical representations used in engineering design optimization for identifying most influential design variables.

**BACKGROUND OF THE INVENTION**

Computer aided engineering (CAE) has been used for supporting engineers in tasks such as analysis, simulation, design, manufacture, etc. In a conventional engineering design procedure, CAE analysis (e.g., finite element analysis (FEA), finite difference analysis, meshless analysis, computational fluid dynamics (CFD) analysis, modal analysis for reducing noise-vibration-harshness (NVH), etc.) has been employed to evaluate responses (e.g., stresses, displacements, etc.). Using automobile design as an example, a particular version or design of a car is analyzed using FEA to obtain the responses due to certain loading conditions. Engineers will then try to improve the car design by modifying certain parameters or design variables (e.g., thickness of the steel shell, locations of the frames, etc.) based on specific objectives and constraints. Another FEA is conducted to reflect these changes until a "best" design has been achieved. However, this approach generally depends on knowledge of the engineers or based on a trial-or-error method.

Furthermore, as often in any engineering problems or projects, these objectives and constraints are generally in conflict and interact with one another and design variables in nonlinear manners. Thus, it is not very clear how to modify them to achieve the "best" design or trade-off. This situation becomes even more complex in a multi-discipline optimization that requires several different CAE analyses (e.g., FEA, CFD and NVH) to meet a set of conflicting objectives. To solve this problem, a systematic approach to identify the "best" design, referred to as design optimization, is used.

Performing optimization of complex products (e.g., automobile, air plane, etc.) having numerous coupled parts leads to a large number of parameters or design variables hence increasing the size of the design space. As a result, the total cost (in terms of engineering and computation) of optimization that requires evaluating response functions of industrial or real world problem (e.g., car crashworthiness simulation) is very expensive due to a large number of designs need to be explored in the complete design space.

However, generally only a few key parameters influence the response functions the most. Reducing the large number of parameters to most influential few would result in a smaller design space thereby costing less to conduct optimization. It would, therefore, be desirable to identify most influential design variables in an engineering design optimization in an efficient, effective, easy and intuitive manner.

**SUMMARY OF THE INVENTION**

A method of identifying most influential design variables in a multi-objective engineering design optimization of a product is disclosed. According to one aspect of the present invention, a product is optimized with a set of design variables and a set of response functions as objectives and constraints. Representative product design alternatives (samples) are chosen from the design space (defined by design variables) and evaluated for responses. Metamodels are then used for fitting the sample responses to facilitate a global sensitivity analysis of all design variables versus the response functions. A graphical presentation tool is configured for allowing the user to conduct "what-if" scenarios by interactively applying respective weight factors to response functions to facilitate identification of most influential design variables.

Once the most influential design variables have been identified, the engineering design optimization can then be performed in a reduced design space. The reduced design space is defined by full range of the most influential design variables with the rest of less important design variables fixed at a particular value. The particular value can be a value obtained from an optimal solution or the baseline value of the design variable.

According to one embodiment, the present invention is directed to a method executed in a computer system for identifying most influential design variables in a multi-objective engineering design optimization of a product, the method comprises: receiving a description of a product to be optimized, the description including a first set of design variables and a set of response functions as objectives and constraints for the engineering design optimization; obtaining results of the set of response functions of a set of candidate products chosen from a first design space defined by the first set of design variables; and selecting a second set of design variables by determining which ones of the first set of design variables are the most influential from a global sensitivity analysis of each of the first set of design variables versus the set of response functions based on the obtained results, the global sensitivity analysis including a graphical presentation tool configured for showing total global sensitivity indices representing influence of each of the first set of design variables to the set of response functions scaled by respective weight factors, wherein the second set of design variables is used for defining a second design space, in which the engineering design optimization of the product is conducted.

Other objects, features, and advantages of the present invention will become apparent upon examining the following detailed description of an embodiment thereof, taken in conjunction with the attached drawings.

## BRIEF DESCRIPTION OF THE DRAWINGS

These and other features, aspects, and advantages of the present invention will be better understood with regard to the following description, appended claims, and accompanying drawings as follows:

FIG. 1 is a diagram showing a tubular member (an exemplary engineering product) to be optimized using thickness as design variable;

FIGS. 2-3 are flowcharts showing an exemplary process of performing engineering design optimization using a global sensitivity analysis together with an interactive graphical presentation tool for screening design variables to a set of most influential ones, according to an embodiment of the present invention;

FIGS. 4-5 collectively shows a diagram illustrating an exemplary graphical presentation of global sensitivity indices for each design variable versus response functions, according to an embodiment of the present invention; and

FIG. 6 is a function diagram showing salient components of a computing device, in which an embodiment of the present invention may be implemented.

## DETAILED DESCRIPTION

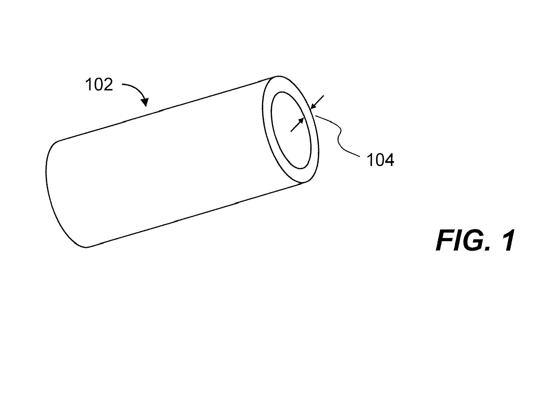

Referring first of FIG. 1, a tubular structural member 102 (i.e., an exemplary engineering product) is optimized in an engineering optimization with design objective of minimizing the weight therefore minimizing the cost for a given material (e.g., regular strength steel) under certain design loading condition. It is evident that thinner thickness 104 would lead to a less weight structure. However, at certain point, the structure would become too weak to stand a design load (e.g., structural failure due to material yielding and/or buckling). Hence, the engineering optimization of this tubular structure requires another design objective of maximizing the strength, which leads to a safer structure. In this exemplary case, thickness 104 is a design variable, which may have a range between lower and upper bounds (e.g., from one eighth of inch to half an inch) as a design space. Any design alternatives are selected from this space. In multi-objective evolutionary algorithm, population or design alternatives at each generation are selected from the design space.

The design space is one-dimensional (e.g., a line) when there is only one design variable. The design space becomes a two-dimensional area for two variables, and so on. For more than three design variables, the design space is a hyperspace that is not possible to illustrate.

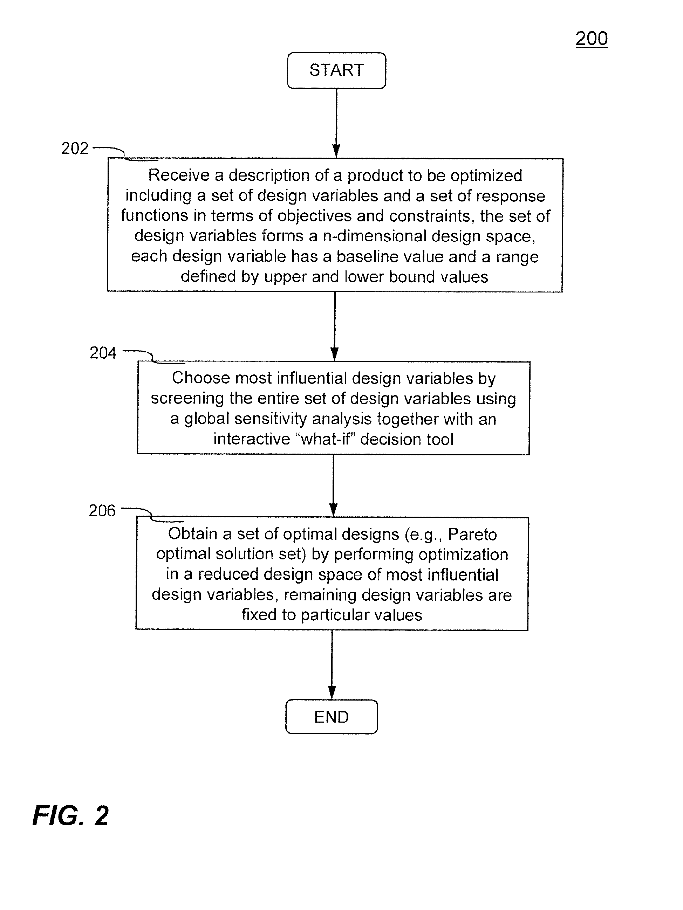

A flowchart shown in FIG. 2 illustrates an exemplary process 200 of conducting an engineering design optimization of a product (e.g., car, air plane, etc.) by identifying a set of most influential design variables. Process 200 is preferably implemented in software.

Process 200 starts by receiving a description of a product to be optimized at step 202. Engineering design optimization is carried out with a set of design variables (i.e., as many as possible number of design variables) and a set of response functions as design objectives and constraints. In optimization of an automobile design for crashworthiness, design objectives and constraints include, for example, minimizing the mass of the car, minimizing intrusion at firewall subject to a predefined impulse. Each design variable has an initial value and a range of upper and lower bound values. The goal of the engineering design optimization is to obtain an optimal solution or a set of Pareto optimal solutions within the design space bounded by the range of all design variables (i.e., n-dimensional hyperspace). The cost and time required to carry out engineering design optimization is substantial if there are large numbers of design variables. For example, as many as hundreds of design variables may be possible in real world application such as automobile crashworthiness.

Next, at step 204, the most influential design variables are chosen by screening the entire set of design variable using a global sensitivity analysis together with an interactive "what-if" decision tool (i.e., a graphical presentation application allows user to interactive adjusting certain parameters). In another embodiment, the user can also pre-define the weight factors to determine most influential design variables.

Theoretical formulation of global sensitivity analysis is summarized as follows: a function $f(\mathbf{x})$ of a square integrable response as a function of a vector of independent uniformly distributed random input variables x in domain [0, 1] is assumed. The function can be decomposed as the sum of functions of increasing dimensionality as

$$f(x) = f_0 + \sum_i f_i(x_i) + \sum_{ij} f_{ij}(x_i, x_j) + \cdots + f_{12\ldots N_v}(x_1, x_2, \cdots x_{N_v}), \qquad (1)$$

where $f_0 = \int_0^1 f d\mathbf{x}$ . . If the following condition

$$\int_0^1 f_{i_1 \ldots i_s} dx_k = 0, \tag{2}$$

is imposed *for k = $i_1$... $i_s$*, the decomposition described in Equation (1) is unique. In context of the global sensitivity analysis, the total variance of function *f*, denoted by V(f), can be shown equal to

$$V(f) = \sum_{i=1}^{N_v} V_i + \sum_{1 \leq i, j < N_v} V_{ij} + \cdots + V_{1 \ldots N_v}, \tag{3}$$

where $V(f) = E((f - f_0)^2)$, and each terms in Equation (3) represents the partial contribution or the partial variance of each independent variable ($V_i$) or a set of variables (e.g., $V_{ij}$) to the total variance, and provides an indication of their relative importance. The partial variances can be calculated using the following expressions:

$$V_i = V\left(E\left[f \mid x_i\right]\right),$$
$$V_{ij} = V\left(E\left[f \mid x_i, x_j\right]\right) - V_i - V_j, \tag{4}$$
$$V_{ijk} = V\left(E\left[f \mid x_i, x_j, x_k\right]\right) - V_i - V_j - V_k,$$

and so on, where *V* and E denote variance and expected value, respectively. Note that,

$$E\left[f \mid x_i\right] = \int_0^1 f_i dx_i,$$
$$V\left(E\left[f \mid x_i\right]\right) = \int_0^1 f_i^2 dx_i. \tag{5}$$

This formulation facilitates the computation of the sensitivity indices corresponding to the independent variables and set of variables. For example, the first and second order sensitivity indices can be computed as

$$S_i = \frac{V_i}{V(f)}, \quad S_{ij} = \frac{V_{ij}}{V(f)}. \tag{6}$$

Under the independent model input assumptions, the sum of all the sensitivity indices is equal to one. The first order sensitivity index ($S_i$) for a given variable represents the main effect of the variable, but it does not take into account the effect of the interaction of the variables. The total contribution of a variable to the total variance is given as the sum of all the interactions and the main effect of the variable and correspondingly, the total sensitivity index ($S_i^{total}$) is defined as

$$S_i^{total} = \frac{V_i + \sum_{j, j \neq i} V_{ij} + \sum \sum_{j,k, j \neq i, k \neq i} V_{ijk} + \cdots}{V(f)}. \tag{7}$$

The above referenced expressions can be easily evaluated using the metamodels of any response function, for example, radial basis function.

In a variance based non-parametric approach, the global sensitivity is estimated for any combination of design variables using Monte-Carlo methods. To calculate the total sensitivity of any design variable $x_i$, the design variable set is divided into two complimentary subsets of $x_i$ and $Z(Z = x_j; \forall j = 1, N_v; j \neq i)$. The purpose of using these subsets is to isolate the influence of $x_i$ from the influence of the remaining design variables included in the subset $Z$. The total sensitivity index for $x_i$ is then defined as

$$S_i^{total} = \frac{V_i^{total}}{V}; V_i^{total} = V_i + V_{i,Z}, \qquad (8)$$

where $V_i$ is the partial variance of the response with respect to $x_i$ and $V_{i,z}$ is the measure of the response variance that is dependent on interactions between $x_i$ and $Z$. Similarly, the partial variance for $Z$ can be defined as $V_Z$. Therefore, the total response variability can be written as

$$V = V_i + V_Z + V_{i,Z}. \qquad (9)$$

These expressions can be computed analytically or via Monte Carlo analysis depending on the form of the basis function. Since the sensitivity indices are non-dimensional entities, the system level importance of any variable can be easily estimated by simply adding all the corresponding indices as follows:

$$S_{i,system}^{total} = \sum_j w_j S_{i,j}^{total};$$
$$S_{i,system} = \sum_j w_j S_{i,j}. \qquad (10)$$

where $S_{i,j}^{total}$ and $S_{i,j}$ represent the total and main sensitivity indices of the $i^{th}$ variable for *the* $j^{th}$ response, respectively and $w_j$ represents the weight associated with the $j^{th}$ response.

A graphical based or graphical presentation tool (e.g., an interactive graphical user interface) is configured to allow a user to interactively apply respective weight factors $w_j$ to each $S_{i,j}^{total}$ and/or $S_{i,j}$. With such graphically representation of complex numerical results (i.e., global sensitivity indices), a set of most influential design variables can be determined intuitively with ease.

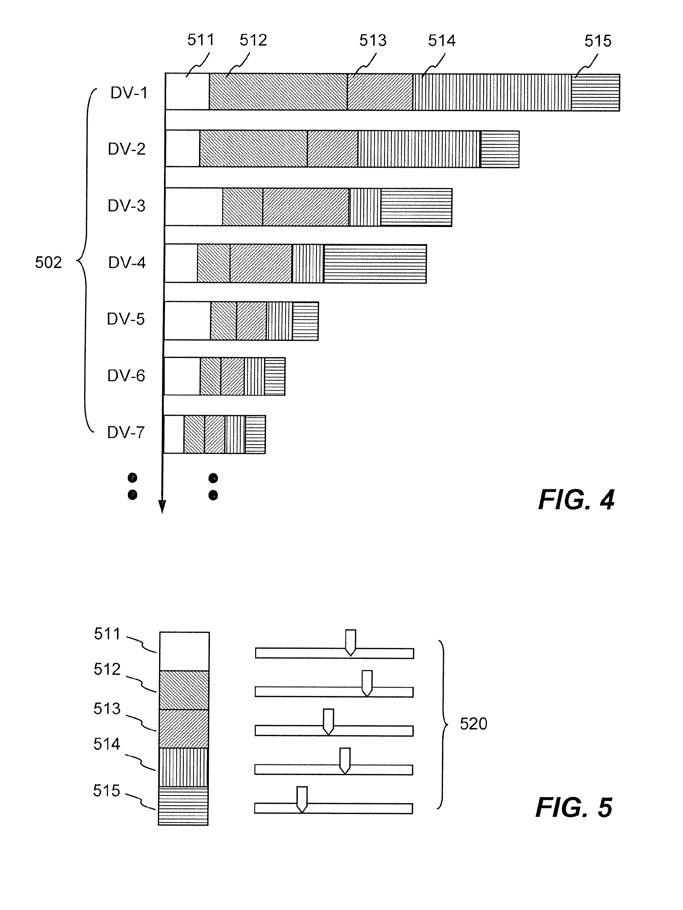

An exemplary graphical representation of global sensitivity indices is shown in FIG. 4. Cumulative total global sensitivity indices 511-515 for objectives and constraints of each of the design variables (DV-1, DV-2, DV-3, ..) 502 are plotted. In the example of FIG. 4, there are five response functions 511-515 depicted by different shades. Contribution of each of the response functions can be adjusted by applying a weight factor. According to one embodiment, FIG. 5 shows a plurality of sliding scales 520, one for each of the response functions 511-515. Sliding scales 520 are configured to be adjusted interactively by user such that a number of "what-if" scenarios can be created. As a result of "what-if" scenarios, a set of most influential design variables is determined. In general, the number of the most influential design variables is significantly smaller than the number of the entire set. In the automobile crashworthiness example, there are about ten most influential design variables among hundreds of total design variables.

Criteria determining which design variables to kept as important or most influential may be conducted in the following manners:

methed 1: selecting those design variables having sensitivity indices greater than a predefined threshold value; or

method 2: selecting those design variables by a two-step procedure:

a) sort the design variable using the sensitivity indices in decreasing order

b) pick those design variables with highest sensitivity indices till the cumulative sensitivity indices are greater than a predefined threshold value.

Once the most influential design variables have been identified, at step 206, engineering design optimization is carried out to obtain a set of optimal designs (i.e., Pareto optimal solution set) in a reduced design space. The reduced design space is defined by the most influential design variables' range. Remaining design variables are fixed to particular values, which can be baseline values or other values that are deemed to be logical (e.g., values obtained from the optimal solution after the screening stage).

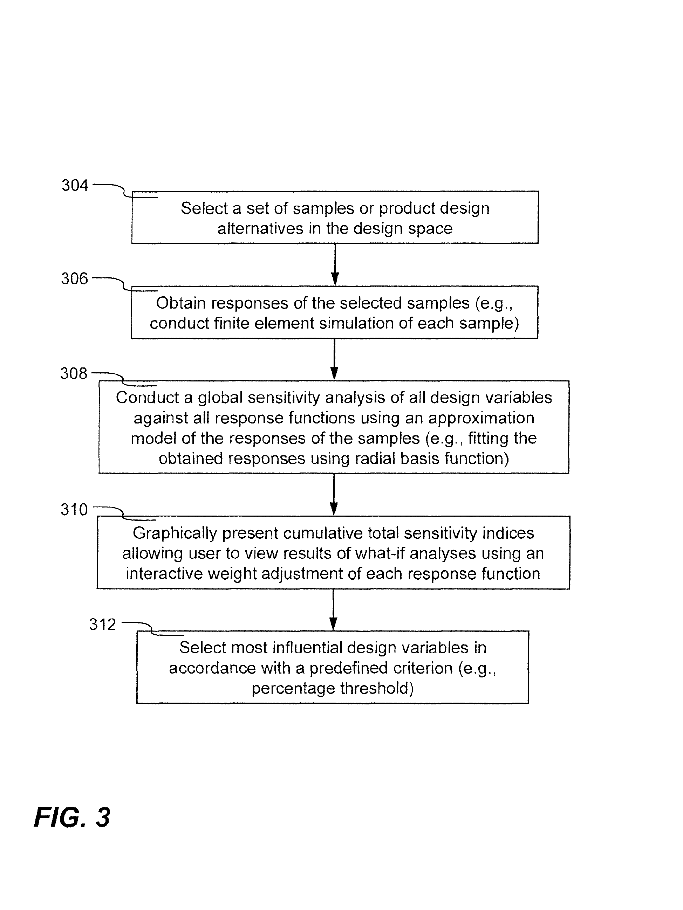

Referring now to FIG. 3, there is shown a flowchart illustrating an exemplary process of identifying most influential design variables in accordance with one embodiment of the present invention. At step 304, a set of samples or product design alternatives is chosen from the design space defined by entire set of design variable. Each of the chosen samples is evaluated for the responses based on design objectives and constraints at step 306. This can be achieved with computer aided engineering analysis (e.g., finite element analysis). In other words, responses of each sample are obtained via computer simulation. Next, at step 308, a global sensitivity analysis is conducted of all design variables versus all response functions using an approximation model (e.g., fitting the obtained sample responses using radial basis function). Cumulative total global sensitivity indices are graphically presented to user (e.g., FIG. 4) and allow the user to interactively conduct "what-if" scenarios by adjusting the weight factors of the responses at step 310. Finally, at step 312, most influential design variables are selected in accordance with a predefined criterion (e.g., a percentage threshold).

Using the automobile crashworthiness example, ten most influential design variables contribute to more than 70% of variability. 13 variables influence the optimization by more than one percent.

It is noted that global sensitivity analysis can be applied multiple times to further reduce the already reduced design space.

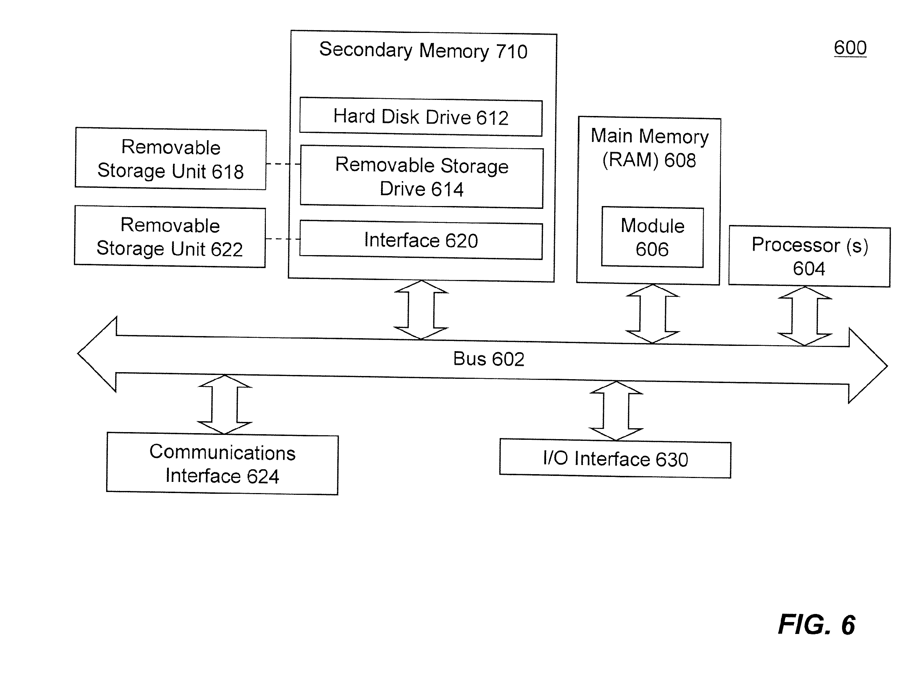

According to one aspect, the present invention is directed towards one or more computer systems capable of carrying out the functionality described herein. An example of a computer system 600 is shown in FIG. 6. The computer system 600 includes one or more processors, such as processor 604. The processor 604 is connected to a computer system internal communication bus 602. Various software embodiments are described in terms of this exemplary computer system. After reading this description, it will become apparent to a person skilled in the relevant art(s) how to implement the invention using other computer systems and/or computer architectures.

Computer system 600 also includes a main memory 608, preferably random access memory (RAM), and may also include a secondary memory 610. The secondary memory 610 may include, for example, one or more hard disk drives 612 and/or one or more removable storage drives 614, representing a floppy disk drive, a magnetic tape drive, an optical disk drive, etc. The removable storage drive 614 reads from and/or writes to a removable storage unit 618 in a well-known manner. Removable storage unit 618, represents a floppy disk, magnetic tape, optical disk, etc. which is read by and written to by removable storage drive 614. As will be appreciated, the removable storage unit 618 includes a computer usable storage medium having stored therein computer software and/or data.

In alternative embodiments, secondary memory 610 may include other similar means for allowing computer programs or other instructions to be loaded into computer system 600. Such means may include, for example, a removable storage unit 622 and an interface 620. Examples of such may include a program cartridge and cartridge interface (such as that found in video game devices), a removable memory chip (such as an Erasable Programmable Read-Only Memory (EPROM), Universal Serial Bus (USB) flash memory, or PROM) and associated socket, and other removable storage units 622 and interfaces 620 which allow software and data to be transferred from the removable storage unit 622 to computer system 600. In general, Computer system 600 is controlled and coordinated by operating system (OS) software, which performs tasks such as process scheduling, memory management, networking and I/O services.

There may also be a communications interface 624 connecting to the bus 602. Communications interface 624 allows software and data to be transferred between computer system 600 and external devices. Examples of communications interface 624 may include a modem, a network interface (such as an Ethernet card), a communications port, a Personal Computer Memory Card International Association (PCMCIA) slot and card, etc. Software and data transferred via communications interface 624. The computer 600 communicates with other computing devices over a data network based on a special set of rules (i.e., a protocol). One of the common protocols is TCP/IP (Transmission Control Protocol/ Internet Protocol) commonly used in the Internet. In general, the communication interface 624 manages the assembling of a data file into smaller packets that are transmitted over the data network or reassembles received packets into the original data file. In addition, the communication interface 624 handles the address part of each packet so that it gets to the right destination or intercepts packets destined for the computer 600.In this document, the terms "computer program medium", "computer readable medium", "computer recordable medium" and "computer usable medium" are used to generally refer to media such as removable storage drive 614 (e.g., flash storage drive), and/or a hard disk installed in hard disk drive 612. These computer program products are means for providing software to computer system 600. The invention is directed to such computer program products.

The computer system 600 may also include an input/output (I/O) interface 630, which provides the computer system 600 to access monitor, keyboard, mouse, printer, scanner, plotter, and alike.

Computer programs (also called computer control logic) are stored as application modules 606 in main memory 608 and/or secondary memory 610. Computer programs may also be received via communications interface 624. Such computer programs, when executed, enable the computer system 600 to perform the features of the present invention as discussed herein. In particular, the computer programs, when executed, enable the processor 604 to perform features of the present invention. Accordingly, such computer programs represent controllers of the computer system 600.

In an embodiment where the invention is implemented using software, the software may be stored in a computer program product and loaded into computer system 600 using removable storage drive 614, hard drive 612, or communications interface 624. The application module 606, when executed by the processor 604, causes the processor 604 to perform the functions of the invention as described herein.

The main memory 608 may be loaded with one or more application modules 606 that can be executed by one or more processors 604 with or without a user input through the I/O interface 630 to achieve desired tasks. In operation, when at least one processor 604 executes one of the application modules 606, the results are computed and stored in the secondary memory 610 (i.e., hard disk drive 612). The status of the CAE analysis or engineering design optimization (e.g., Pareto optimal solutions before and after combination) is reported to the user via the I/O interface 630 either in a text or in a graphical representation.

Although the present invention has been described with reference to specific embodiments thereof, these embodiments are merely illustrative, and not restrictive of, the present invention. Various modifications or changes to the specifically disclosed exemplary embodiments will be suggested to persons skilled in the art. For example, whereas the number of response functions and the number of design variables have been shown and described with relatively exemplary small numbers, larger numbers of design variables and objectives can be used. Furthermore, whereas a stacked bar chart is shown and described to graphically represent results of a global sensitivity analysis, other types can be used instead, for example, a pie chart. In summary, the scope of the invention should not be restricted to the specific exemplary embodiments disclosed herein, and all modifications that are readily suggested to those of ordinary skill in the art should be included within the spirit and purview of this application and scope of the appended claims.

**Claims**

1. A method executed in a computer system for identifying most influential design variables in a multi-objective engineering design optimization of a product, said method comprising:

   receiving, by an application module in a computer system, a description of a product to be optimized, the description including a first set of design variables and a set of response functions as objectives and constraints for the engineering design optimization;
   obtaining, by said application module, results of the set of response functions of a set of candidate products chosen from a first design space defined by the first set of design variables; and
   selecting, by said application module, a second set of design variables by determining which ones of the first set of design variables are most influential from a global sensitivity analysis of each of the first set of design variables versus the set of response functions based on the obtained results, the global sensitivity analysis including a graphical presentation tool configured for showing total global sensitivity indices representing influence of each of the first set of design variables to the set of response functions scaled by respective weight factors, wherein the second set of design variables is used for defining a second design space, in which the engineering design optimization of the product is conducted thereafter.

2. The method of claim 1, wherein each of the first set of design variables includes a range defined by upper and lower bound values.

3. The method of claim 1, wherein the first design space is larger than the second design space.

4. The method of claim 1, further comprises creating, by said application module, a set of metamodels by fitting the obtained responses.

5. The method of claim 1, wherein each of the second set of design variables has a total sensitivity index higher than a predetermined threshold.

6. The method of claim 1, wherein each of the second set of design variables is selected in a procedure comprises:
   sorting the first set of design variables with a decreasing global sensitivity indices order; and selecting those of the first set of design variables having highest sensitivity indices till cumulative sensitivity indices of said selected those are greater than a predefined threshold.

7. The method of claim 1, wherein the weight factors are adjusted by a user with an interactive adjustment mechanism in the graphical presentation tool.

8. The method of claim 1, wherein the graphical presentation tool is a stacked bar chart illustrating cumulative total sensitivity indices.

9. The method of claim 8, wherein the stacked bar chart includes one bar for said each of the first set of design variables and the bar includes a plurality of components each corresponding to one of the response functions

10. The method of claim 9, wherein the plurality of components varies with said respective weight factors.

11. The method of claim 1, further includes graphically presenting, by said application module, a means for interactively adjusting weight factor of the response functions.

12. The method of claim 11, wherein the means for interactively adjusting weight factor comprises a simulated sliding meter allowing a user to manipulate interactively.

13. The method of claim 1, wherein the graphical presentation is a stacked pie chart.

14. A computer readable medium containing instructions for identifying most influential design variables in a multi-objective engineering design optimization of a product by a method executed in a computer system according to claim 1.

15. A system for identifying most influential design variables in a multi-objective engineering design optimization of a product, said system comprising:

a main memory for storing computer readable code for at least one application module;
at least one processor coupled to the main memory, said at least one processor executing the computer readable code in the main memory to cause the at least one application module to perform operations by a method of:
receiving a description of a product to be optimized, the description including a first set of design variables and a set of response functions as objectives and constraints for the engineering design optimization;
obtaining results of the set of response functions of a set of candidate products chosen from a first design space defined by the first set of design variables; and
selecting a second set of design variables by determining which ones of the first set of design variables are most influential from a global sensitivity analysis of each of the first set of design variables versus the set of response functions based on the obtained results, the global sensitivity analysis including a graphical presentation tool configured for showing total global sensitivity indices representing influence of each of the first set of design variables to the set of response functions scaled by respective weight factors, wherein the second set of design variables is used for defining a second design space, in which the engineering design optimization of the product is conducted thereafter.

102

104

*FIG. 1*

200

START

202

Receive a description of a product to be optimized including a set of design variables and a set of response functions in terms of objectives and constraints, the set of design variables forms a n-dimensional design space, each design variable has a baseline value and a range defined by upper and lower bound values

204

Choose most influential design variables by screening the entire set of design variables using a global sensitivity analysis together with an interactive "what-if" decision tool

206

Obtain a set of optimal designs (e.g., Pareto optimal solution set) by performing optimization in a reduced design space of most influential design variables, remaining design variables are fixed to particular values

END

## FIG. 2

304 — Select a set of samples or product design alternatives in the design space

306 — Obtain responses of the selected samples (e.g., conduct finite element simulation of each sample)

308 — Conduct a global sensitivity analysis of all design variables against all response functions using an approximation model of the responses of the samples (e.g., fitting the obtained responses using radial basis function)

310 — Graphically present cumulative total sensitivity indices allowing user to view results of what-if analyses using an interactive weight adjustment of each response function

312 — Select most influential design variables in accordance with a predefined criterion (e.g., percentage threshold)

*FIG. 3*

*FIG. 4*

*FIG. 5*

FIG. 6

EP 2 378 447 A1

Europäisches
Patentamt

European
Patent Office

Office européen
des brevets

# EUROPEAN SEARCH REPORT

Application Number

EP 11 16 1336

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | PARK: "Shape optimization of a plate-fin type heat sink with triangular-shaped vortex generator", JOURNAL OF MECHANICAL SCIENCE AND TECHNOLOGY, vol. 18, no. 9, 1 January 2004 (2004-01-01), page 1590, XP55002803, ISSN: 1738-494X, DOI: 10.1007/BF02990374 | 1-3,5-15 | INV. G06F17/50 |
| A | * the whole document * * page 1589, column 2, paragraph 1 * ----- | 4 | |
| A | ERDEM ACAR ET AL: "System reliability based vehicle design for crashworthiness and effects of various uncertainty reduction measures", STRUCTURAL AND MULTIDISCIPLINARY OPTIMIZATION, SPRINGER, BERLIN, DE, vol. 39, no. 3, 31 October 2008 (2008-10-31), pages 311-325, XP019735710, ISSN: 1615-1488 * the whole document * * section 2 * ----- | 1-15 | |
| | | | TECHNICAL FIELDS SEARCHED (IPC) |
| | | | G06F |
| A | HAJELA PRABHAT ET AL: "CONTROLLED GROWTH METHOD - A TOOL FOR STRUCTURAL OPTIMIZATION.", AIAA JOURNAL, vol. 20, no. 10, 1981, pages 1440-1441, XP009150309, * the whole document * ----- | 1-15 | |

The present search report has been drawn up for all claims

| Place of search | Date of completion of the search | Examiner |
|---|---|---|
| Munich | 21 July 2011 | Wellisch, J |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

.........................................................................

& : member of the same patent family, corresponding
    document

EPO FORM 1503 03.82 (P04C01)